**Europäisches Patentamt**

**European Patent Office**

**Office européen des brevets**

(19)

(11) Numéro de publication: **0 131 519**
**B1**

(12) # FASCICULE DE BREVET EUROPEEN

(45) Date de publication du fascicule du brevet:
**24.08.88**

(51) Int. Cl.⁴: **B 61 C 15/12**, B 60 L 3/10

(21) Numéro de dépôt: **84401441.5**

(22) Date de dépôt: **06.07.84**

(54) **Dispositif de régulation des couples d'entraînement des essieux d'une locomotive.**

(30) Priorité: **08.07.83 FR 8311395**

(43) Date de publication de la demande:
**16.01.85 Bulletin 85/3**

(45) Mention de la délivrance du brevet:
**24.08.88 Bulletin 88/34**

(84) Etats contractants désignés:
**AT BE CH DE FR GB IT LI LU NL SE**

(56) Documents cités:
**CH - A - 241 342**
**FR - A - 2 363 468**
**FR - A - 2 410 588**
**US - A - 3 267 345**

**BBC NACHRICHTEN, vol. 49, no. 2, février 1967, pages 60-73; K. LÄPPLE: "Achsentlastung und Achslastanpassung bei elektrischen Triebfahrzeugen"**

(73) Titulaire: **SOCIETE M T E Société anonyme, 32, Quai de Dion Bouton, F-92800 Puteaux (FR)**

(72) Inventeur: **Piel, Daniel, 190 rue du Pas de Cible, F-71710 Montcenis (FR)**

(74) Mandataire: **Weinmiller, Jürgen et al, Lennéstrasse 9 Postfach 24, D-8133 Feldafing (DE)**

**Description**

La présente invention se rapporte à un dispositif de régulation des couples d'entraînement des essieux des bogies moteurs d'une locomotive pour conserver la capacité de traction malgré les variations des charges aux essieux.

Le brevet US-3 267 345 décrit un tel dispositif conçu pour une locomotive composée de deux voitures. Le poids de l'une d'elles diminuant, ce dispositif diminue les couples d'entraînement transmis aux essieux des bogies moteurs de cette voiture et augmente ceux transmis aux essieux des bogies moteurs de l'autre voiture.

Cependant ce dispositif ne permet pas de résoudre les problèmes que posent les phénomènes dits de cabrages auxquels sont soumis la locomotive et ses bogies et qui tendent à les faire pivoter autour de leur axe transversal en provoquant des variations de charge aux essieux.

Le cabrage de la caisse est lié au fait que l'effort résistant appliqué à la caisse (par la rame) se situe plus haut que l'effort de traction transmis par les bogies à la caisse.

Le cabrage du bogie est lié au fait que l'effort résistant appliqué au bogie par la caisse se situe plus haut que l'effort de traction au niveau des rails. Il est lié aussi dans les bogies comportant des moteurs suspendus par le nez au fait que les moteurs s'appuient sur le châssis de bogie en introduisant un allègement sur un essieu et une surcharge sur l'autre essieu.

Ce mouvement de cabrage fait que certains essieux sont déchargés alors que d'autres essieux sont surchargés. Il y a une diminution de l'effort de traction global et apparition de patinage.

Pour éviter le mouvement de cabrage, on a trouvé des solutions se rapportant aux liaisons entre la caisse et les bogies. Une solution consiste à disposer le plus près possible du niveau des rails, les points de liaison entre la bogie et la caisse. Cette solution est dite «traction basse». Une réalisation de ce type consiste en des bielles reliant la caisse aux bogies, les points d'attache aux bogies étant situés le plus bas possible. On a imaginé de moduler l'alimentation des moteurs électriques en fonction des variations instantanées des vitesses de rotation des essieux. La fonction de ce système n'est que d'empêcher le patinage des essieux les moins chargés.

La présente invention a pour but de fournir un dispositif anti-cabrage pour un bogie, c'est-à-dire un dispositif diminuant le couple transmis à un essieu lorsque la charge de celui-ci croît et augmentant le couple transmis à un essieu lorsque la charge de celui-ci décroît sans qu'il y ait de variation de l'effort de traction global. Le dispositif régule les couples d'entraînement des essieux en fonction des charges verticales instantanées mesurées sur au moins un essieu moteur du bogie. Ce dispositif fonctionne de manière continue et avant apparition du phénomène de patinage.

Le dispositif de régulation selon l'invention est appliqué à un bogie moteur d'une locomotive comprenant des essieux individuellement entraînés par des moteurs électriques, il contrôle les moteurs et reçoit des signaux de capteurs de mesure de charge verticale.

Il est essentiellement caractérisé par le fait que les capteurs mesurent la charge verticale d'au moins un essieu moteur et sont montés sur la suspension primaire dudit essieu, et par le fait que le dispositif est un dispositif anti-cabrage pour le bogie. Selon une caractéristique supplémentaire, les capteurs sont montés sur les plaques assises supérieures des ressorts de la suspension primaire.

L'invention va maintenant être décrite avec plus de détails en se référant à un mode de réalisation donné à titre d'exemple et représenté par les dessins annexés.

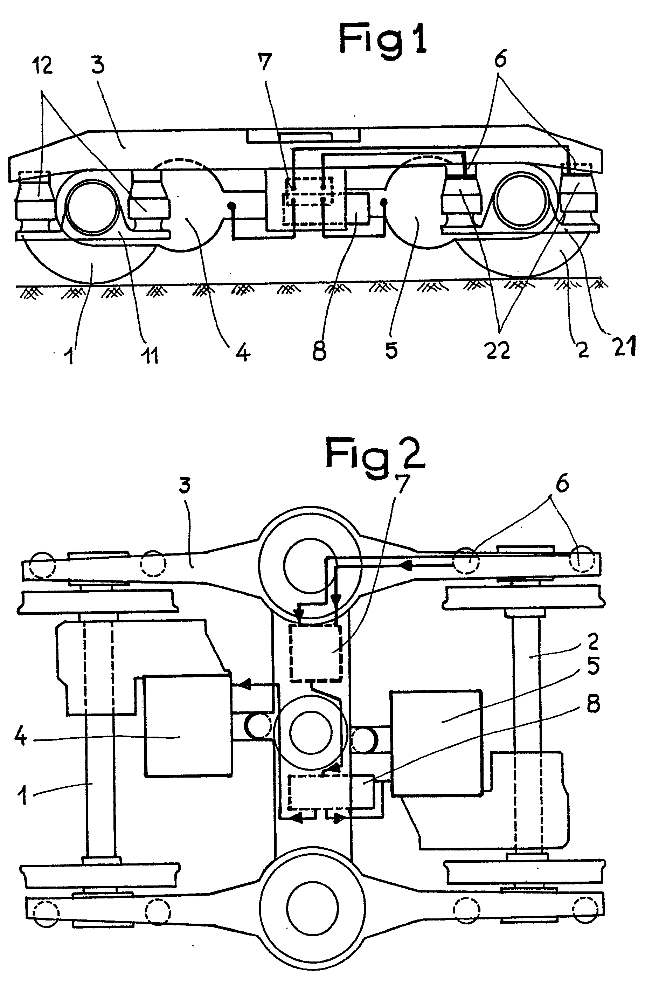

Les figures 1 et 2 représentent un dispositif selon l'invention équipant un bogie moteur vu en élévation sur la figure 1 et vu de dessus sur la figure 2.

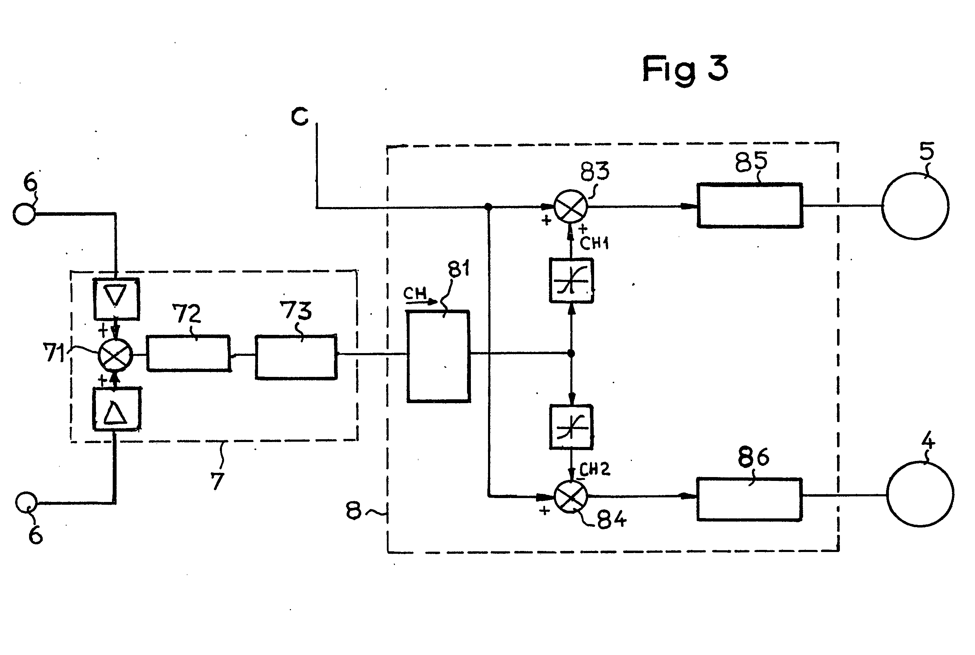

La figure 3 est un diagramme illustrant la partie électronique du dispositif.

Le dispositif peut équiper chaque bogie d'une locomotive. Un bogie est représenté par les figures, les autres bogies étant similaires.

Le bogie comporte des essieux 1 et 2 dont les boîtes d'essieux sont repérées 11 et 21 respectivement. Le châssis de bogie 3 est suspendu sur les boîtes d'essieux 11 et 21 par des appuis élastiques 12 et 22 qui constituent la suspension primaire. Chaque boîte supporte le châssis 3 par deux appuis élastiques (ressorts métalliques par exemple) disposés de part et d'autre du plan de symétrie passant par l'axe d'essieu. Chaque essieu 1 ou 2 est accouplé à un moteur 4 ou 5 respectivement, par l'intermédiaire d'un train réducteur.

Le dispositif comporte des capteurs de force 6 qui mesurent la charge verticale instantanée sur une boîte d'essieu telle que 21 par exemple. A chaque appui élastique 22 de la suspension primaire est associé à un capteur de force 6.

Les capteurs de force 6 sont placés sur les plaques assises des ressorts, de préférence sur les plaques assises supérieures. Dans le cas où les appuis élastiques sont des ressorts métalliques, les capteurs de force 6 pourraient être placés sur la surface des fils constituant les ressorts. Les capteurs de force 6 sont constitués par des jauges de contrainte ou par des capteurs à quartz ou autres.

Les capteurs de force 6 transmettent les signaux représentatifs de la charge verticale à un circuit électronique de traitement des signaux repéré 7 qui se compose d'un amplificateur, d'un sommateur 71, d'un moyenneur 72 et d'un filtre 73. Ce circuit 7 reçoit les signaux provenant des capteurs 6 les amplifie, les somme et en donne une valeur moyenne, filtrée. Le signal de sortie CH du circuit 7 qui est représentatif de la charge de l'essieu 2 est envoyé à un circuit électronique de régulation 8 qui reçoit par ailleurs un signal C de consigne de couple ou de puissance. Le circuit 8 opère en 81 une mise à l'échelle commune des valeurs de consigne et de mesure. Le signal CH image de la charge s'additionne en 83 à la consigne C et se soustrait en 84 de la même consigne C. Le signal venant de 83 est injecté à l'entrée du régulateur de couple 85 du moteur 5 dont l'essieu porte les capteurs de charge et le signal venant de 84 est injecté à l'entrée du régulateur de couple 86 de l'autre moteur 4.

Ainsi le circuit 8 commande, les organes de réglage de la puissance des moteurs électriques 4 et 5, de manière que le couple transmis par l'un ou l'autre des moteurs 4 ou 5 augmente lorsque la charge de l'essieu couplé croît et diminue lorsque la charge de l'essieu couplé décroît.

On pourrait, pour déterminer la charge par essieu, faire des mesures sur les deux boîtes d'essieu d'un même essieu.

Le dispositif décrit ci-dessus s'applique aux locomotives électrique et diesel électrique. Il pourrait être utilisé sur des locomotives types CC.

**Revendications**

1. Dispositif de régulation des couples des essieux des bogies moteurs d'une locomotive comprenant des essieux individuellement entraînés par des moteurs électriques (4, 5), ledit dispositif contrôlant lesdits moteurs et recevant des signaux de capteurs de mesure (6) de charge verticale, caractérisé par le fait que lesdits capteurs mesurent la charge verticale d'au moins un essieu moteur et sont montés sur la suspension primaire dudit essieu, et par le fait que le dispositif est un dispositif anti-cabrage pour le bogie.

2. Dispositif selon la revendication 1, caractérisé par le fait que les capteurs (6) sont montés sur les plaques assises supérieures des appuis élastiques (12 et 22) de la suspension primaire.

3. Dispositif selon l'une quelconque des revendications précédentes, caractérisé par le fait que les capteurs sont des jauges de contrainte.

4. Dispositif selon l'une des revendications 1 ou 2, caractérisé par le fait que les capteurs sont des capteurs à quartz.

5. Dispositif selon l'une quelconque des revendications précédentes, caractérisé par le fait qu'il comporte un ensemble de traitement des signaux (7) recevant les signaux des capteurs (6) et fournissant une valeur moyenne amplifiée et filtrée à un circuit de régulation (8) qui commande les moteurs (4, 5).

**Claims**

1. A device for controlling the traction torque of the axles of motor bogies of a locomotive, comprising axles individually driven by electric motors (4, 5), the device being adapted to control said motors and to receive signals from vertical load measuring sensors (6), characterized in that the sensors measure the vertical load of at least one motor axle and are mounted on the primary suspension of this axle, and that the device is an anti-nose lift device for the a bogie.

2. A device according to claim 1, characterized in that the sensors (6) are mounted on the plates seated above the elastic supports (12 and 22) of the primary suspension.

3. A device according to any of the preceding claims, characterized in that the sensors are stress gauges.

4. A device according to any of claims 1 or 2, characterized in that the sensors are quartz sensors.

5. A device according to any one of the preceding claims, characterized in that it comprises a signal processing assembly (7) receiving the signals from the sensors (6) and delivering an amplified and filtered average value to a control circuit (8) which controls the motors (4, 5).

**Patentansprüche**

1. Vorrichtung zur Regelung des Drehmoments der Achsen von Antriebsdrehgestellen einer Lokomotive mit einzeln durch Elektromotoren (4, 5) angetriebenen Achsen, wobei die Vorrichtung die Motoren steuert und Signale von Messwertgebern (6) für die vertikale Belastung erhält, dadurch gekennzeichnet, dass die Messwertgeber die vertikale Belastung mindestens einer Antriebsachse messen und auf der Primäraufhängung dieser Achse angebracht sind, und dass die Vorrichtung eine Anti-Nickvorrichtung für das Drehgestell ist.

2. Vorrichtung nach Anspruch 1, dadurch gekennzeichnet, dass die Messwertgeber (6) auf den oberen Sitzplatten der elastischen Stützen (12 und 22) der Primäraufhängung montiert sind.

3. Vorrichtung nach einem der vorhergehenden Ansprüche, dadurch gekennzeichnet, dass die Messwertgeber Dehnungsmessstreifen sind.

4. Vorrichtung nach einem der Ansprüche 1 oder 2, dadurch gekennzeichnet, dass die Messwertgeber Quarzmesssonden sind.

5. Vorrichtung nach einem der vorhergehenden Ansprüche, dadurch gekennzeichnet, dass sie eine Signalverarbeitungsanordnung (7) aufweist, die die Signale der Messwertgeber (6) empfängt und einen verstärkten, gefilterten Mittelwert an einen Steuerkreis (8) liefert, der die Motoren (4, 5) steuert.

# Fig 1

# Fig 2

# Fig 3

0 131 519